Europäisches Patentamt

European Patent Office

Office européen des brevets

(11) Veröffentlichungsnummer: **0 489 235 A1**

## EUROPÄISCHE PATENTANMELDUNG

(21) Anmeldenummer: **91116006.7**

(22) Anmeldetag: **20.09.91**

(51) Int. Cl.⁵: **F16C 33/46**

(30) Priorität: **01.12.90 DE 4038444**

(43) Veröffentlichungstag der Anmeldung:
**10.06.92 Patentblatt 92/24**

(84) Benannte Vertragsstaaten:
**DE ES FR GB IT**

(71) Anmelder: **INA Wälzlager Schaeffler KG**
**Industriestrasse 1-3 Postfach 1220**
**W-8522 Herzogenaurach(DE)**

(72) Erfinder: **Müntnich, Leo**
**Schulstrasse 16**
**W-8521 Aurachtal(DE)**
Erfinder: **Waldert, Hartwig**
**Am Fürstenberg 30**
**W-8555 Adelsdorf(DE)**
Erfinder: **Steinberger, Wolfgang, Dipl.-Ing.**
**(FH)**
**von-Hauck-Strasse 30**
**W-8522 Herzogenaurach(DE)**

(54) **Geschlitzter Wälzkörperkäfig.**

(57) Die Erfindung betrifft einen Wälzkörperkäfig (1) aus polymerem Werkstoff, bei dem in Taschen (2) Wälzkörper geführt sind und der an wenigstens einer Umfangsstelle geschlitzt ist, wobei die die Trennfuge (3) begrenzenden Käfigenden (4, 5) durch Stege (6, 7) gebildet sind, welche miteinander korrespondierende Vorsprünge (8) und Ausnehmungen (9) aufweisen, die diese Käfigenden (4, 5) wenigstens in axialer Richtung formschlüssig festlegen. Damit das Käfigschloß (11) in Umfangsrichtung einen möglichst geringen Bauraum einnimmt, sind die Ausnehmungen (9) so ausgebildet, daß sie in dem das jeweilige Käfigende (4, 5) bildenden Steg (6, 7) bis in die angrenzende Tasche (10, 12) hineinreichen und daß die in die Ausnehmungen (9) hineinragenden Vorsprünge (8) bei geschlossener Trennfuge (3) maximal an der dem Käfigende (4, 5) zugewandten Begrenzungsfläche der Tasche (10, 12) enden.

Fig. 1

EP 0 489 235 A1

Die Erfindung betrifft einen Wälzkörperkäfig, insbesondere aus polymerem Werkstoff, bei dem in Taschen Wälzkörper geführt sind und der an wenigstens einer Umfangsstelle geschlitzt ist, wobei die die Trennfuge begrenzenden Käfigenden durch Stege gebildet sind, welche miteinander korrespondierende Vorsprünge und Ausnehmungen aufweisen, die diese Käfigenden wenigstens in axialer Richtung formschlüssig festlegen.

Derartige geschlitzte Wälzkörperkäfige, bei denen ein an den Käfigenden angebrachtes sogenanntes Schloß die Käfigenden wenigstens in axialer Richtung festlegt, sind z. B. aus der EP-PS 00 16 880 bekannt. In dieser Variante sind die Vorsprünge und Ausnehmungen in den Käfigenden so gestaltet, daß diese Käfigenden sowohl in axialer als auch in radialer Richtung formschlüssig festgelegt, jedoch in Umfangsrichtung zueinander relativbeweglich sind. Hinsichtlich der Funktion erfüllen diese Bauarten von Käfigschlössern vollauf ihren Zweck.

Nachteilig erscheint jedoch der große Raumbedarf dieser Käfigschlösser. Der Bauraum des Käfigschlosses geht zu Lasten der in dem Käfig unterbringbaren Wälzkörper, so daß die Tragfähigkeit derart geschlitzter Wälzkörperkränze gegenüber der Tragfähigkeit ungeschlitzter Kränze reduziert ist.

Die Aufgabe der Erfindung besteht deshalb darin, einen geschlitzten Wälzkörperkäfig zu schaffen, bei dem der Bauraumbedarf des Schlosses minimiert ist und eine optimale Anzahl von Wälzkörpern im Käfig untergebracht werden kann.

Diese Aufgabe wird erfindungsgemäß dadurch gelöst, daß die Ausnehmungen in dem das jeweilige Käfigende bildenden Steg bis in die angrenzende Tasche hineinreichen und daß die Vorsprünge bei geschlossener Trennfuge maximal an der dem Käfigende zugewandten Begrenzungsfläche der Tasche enden.

Mit der erfindungsgemäßen Bauweise wird erreicht, daß das sogenannte Käfigschloß vollständig in den das jeweilige Käfigende bildenden Steg integriert ist, so daß in Umfangsrichtung der Raumbedarf des Käfigschlosses nur etwa das Doppelte eines einzelnen Steges im übrigen Käfig beträgt. Die im Käfig unterbringbare Anzahl von Wälzkörpern wird folglich durch die erfindungsgemäße Bauweise des Schlosses kaum beeinträchtigt. Die Führung des Schlosses ist in Umfangsrichtung durch Ausnutzung der Stegbreite gegeben.

In einer besonders vorteilhaften Ausführung der Erfindung ist vorgesehen, daß insbesondere bei mehrreihigen Wälzkörperkäfigen mehrere Vorsprünge und Ausnehmungen in axialer Richtung abwechselnd an den Käfigenden angeordnet sind. Zum Zweck der Festlegung der Käfigenden in Umfangsrichtung können außerdem im Bereiche dieser Vorsprünge und Ausnehmungen miteinander korrespondierende Nasen vorgesehen sein, so daß die Käfigenden in Umfangsrichtung eine begrenzte Bewegung ausführen können, bevor die Nasen ineinander verhaken.

In einer anderen Variante sind im Bereich der Vorsprünge und Ausnehmungen in Umfangsrichtung angeordnete miteinander korrespondierende Führungsflächen vorgesehen, die die Käfigenden in radialer Richtung festlegen.

Eine weitere Variante der Erfindung, bei der die Käfigenden in beiden axialen und radialen Richtungen formschlüssig festgelegt sind und in Umfangsrichtung nur eine begrenzte Bewegung ausführen können, ergibt sich, wenn sowohl miteinander korrespondierende Nasen als auch Führungsflächen vorgesehen sind.

Im Zusammenhang mit der Robotermontage erscheint es sinnvoll, bei geschlitzten Käfigen die Käfigenden vor der Montage in allen Raumrichtungen gegeneinander festzulegen. Dies wird erfindungsgemäß dadurch erreicht, daß im Bereich der Vorsprünge und Ausnehmungen bei offener Trennfuge spröde Verbindungen zwischen den Käfigenden vorgesehen sind, die eine Sollbruchstelle bilden und bei der Montage des Käfigs durch Schließen der Trennfuge problemlos aufgebrochen werden können. Besonders vorteilhaft ist die Anordnung der Verbindungsstelle zwischen den einander berührenden Kanten zweier Vorsprünge.

Die Erfindung wird im folgenden anhand einiger Ausführungsbeispiele erläutert. Es zeigen:

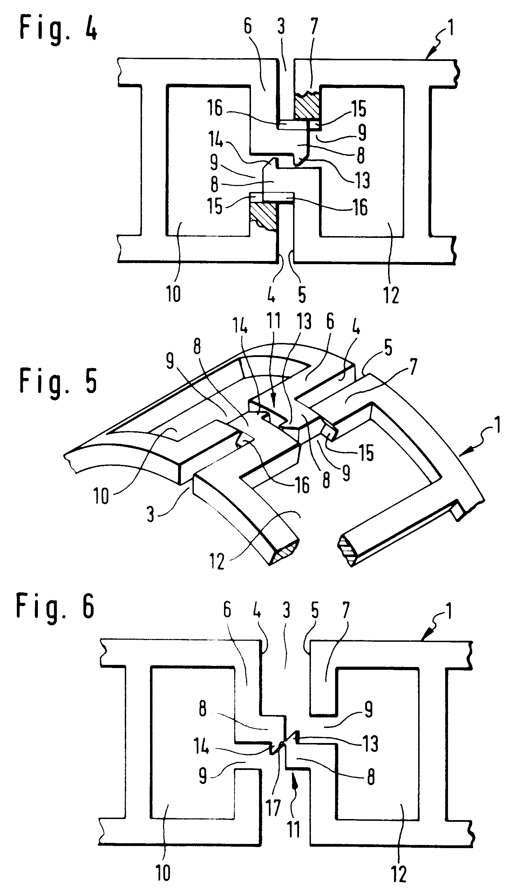

Figur 1
einen erfindungsgemäßen Wälzkörperkäfig in perspektivischer Ansicht,
Figuren 2 bis 4
eine Teildraufsicht auf einen erfindungsgemäßen Wälzkörperkäfig
Figur 5
eine perspektivische Teilansicht des Wälzkörperkäfigs nach Figur 4 und
Figur 6
eine Teildraufsicht auf einen erfindungsgemäßen Wälzkörperkäfig mit Verbindungsstelle.

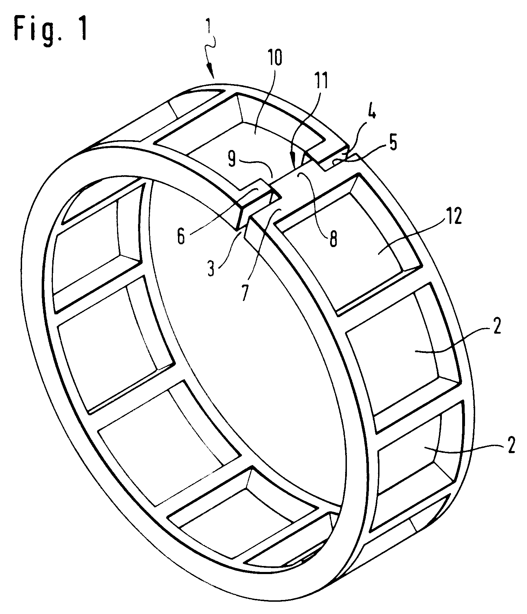

In Figur 1 ist ein Wälzkörperkäfig 1 perspektivisch dargestellt, bei dem Taschen 2 für Wälzkörper vorgesehen sind und der an einer Umfangsstelle geschlitzt ist, wobei die die Trennfuge 3 begrenzenden Käfigenden 4, 5 durch Stege 6, 7 gebildet sind, an denen miteinander korrespondierende Vorsprünge 8 und Ausnehmungen 9 vorgesehen sind, die derart zusammenwirken, daß die Käfigenden 4, 5 in axialer Richtung gegeneinander festgelegt sind. Die Ausnehmung 9 stellt dabei einen Durchbruch vom Käfigende 4 zur angrenzenden Tasche 10 dar, so daß der das Käfigende 4 bildende Steg 6 vollständig in das sogenannte Käfigschloß 11 integriert ist. Damit beträgt der Abstand zwischen den jeweils den Käfigenden benachbarten Taschen 10, 12 in Umfangsrichtung nur etwa das Doppelte der Stegbreite zwischen zwei Taschen 2 im übrigen Käfig 1, womit erreicht wird, daß eine optimale Anzahl von Wälzkörpern im Käfig 1 untergebracht werden kann.

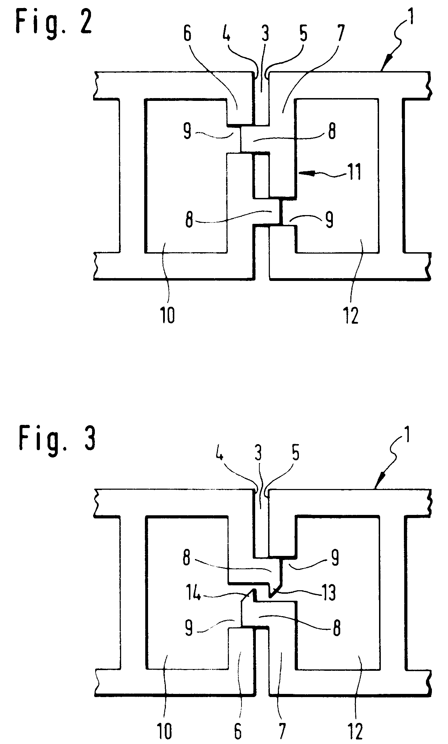

Figur 2 zeigt eine Teildraufsicht auf einen Wälzkörperkäfig 1 im Bereich der Trennfuge 3 und des Käfigschlosses 11. In dieser Ausführung sind an den Stegen 6, 7 in axialer Richtung abwechselnd Vorsprünge 8 und Ausnehmungen 9 angeordnet.

In Figur 3 ist wiederum nur der Käfigabschnitt mit der Trennfuge 3 gezeigt, wobei die Vorsprünge 8 mit den korrespondierenden Ausnehmungen 9 so angeordnet sind, daß in deren Bereich miteinander korrespondierende Nasen 13, 14 vorgesehen werden können, die eine begrenzte Bewegung der Käfigenden 4, 5 in Umfangsrichtung erlauben, bevor sie ineinander verhaken.

Figur 4 zeigt eine Erweiterung der Figur 3, bei der an den Vorsprüngen 8 und Ausnehmungen 9 Führungsflächen 15, 16 vorgesehen sind, die die Käfigenden in radialer Richtung gegeneinander festlegen, während gleichzeitig korrespondierende Nasen 13, 14 an den von den Führungsflächen 15, 16 abgewandten Seiten der Vorsprünge 8 eine begrenzte Bewegung der Käfigenden 4, 5 in Umfangsrichtung erlauben, bevor sie ineinander verhaken. Zur Verdeutlichung ist in Figur 5 die Ausführung nach Figur 4 nochmals perspektivisch dargestellt.

Figur 6 zeigt eine Käfigversion, die insbesondere für die Robotermontage geeignet ist. Bei geöffneter Trennfuge 3 sind vor der Montage die Vorsprünge 8 an ihren einander berührenden Kanten spröde miteinander verbunden, wobei die Verbindung eine Sollbruchstelle darstellt. Während der Montage wird die Trennfuge 3 durch den Greiferarm des Roboters geschlossen, wobei die spröde Verbindungsstelle 17 aufbricht und die Beweglichkeit der Käfigenden 4, 5 in Umfangsrichtung gewährleistet ist.

Neben diesen Ausführungsbeispielen sind weitere konstruktive Varianten der Erfindung denkbar, bei denen das Käfigschloß in die Stege der an die Käfigenden angrenzenden Taschen integriert ist.

## Patentansprüche

1. Wälzkörperkäfig (1), insbesondere aus polymerem Werkstoff, bei dem in Taschen (2) Wälzkörper geführt sind und der an wenigstens einer Umfangsstelle geschlitzt ist, wobei die die Trennfuge (3) begrenzenden Käfigenden (4, 5) durch Stege (6, 7) gebildet sind, welche miteinander korrespondierende Vorsprünge (8) und Ausnehmungen (9) aufweisen, die diese Käfigenden (4, 5) wenigstens in axialer Richtung formschlüssig festlegen, **dadurch gekennzeichnet**, daß die Ausnehmungen (9) in dem das jeweilige Käfigende (4, 5) bildenden Steg (6, 7) bis in die angrenzende Tasche (10, 12) hineinreichen und daß die in die Ausnehmungen (9) hineinragenden Vorsprünge (8) bei geschlossener Trennfuge (3) maximal an der dem Käfigende (4, 5) zugewandten Begrenzungsfläche der Tasche (10, 12) enden.

2. Wälzkörperkäfig nach Anspruch 1, **dadurch gekennzeichnet**, daß mehrere Vorsprünge (8) und Ausnehmungen (9) in axialer Richtung abwechselnd an den die Käfigenden (4, 5) bildenden Stegen (6, 7) angeordnet sind.

3. Wälzkörperkäfig nach Anspruch 1, **dadurch gekennzeichnet,** daß an den Vorsprüngen (8) und in den Ausnehmungen (9) miteinander korrespondierende Nasen (13, 14) vorgesehen sind, die eine Bewegung der Käfigenden (4, 5) in Umfangsrichtung nach einem begrenzten Weg verhindern.

4. Wälzkörperkäfig nach Anspruch 1, **dadurch gekennzeichnet**, daß an den Vorsprüngen (8) und Ausnehmungen (9) miteinander korrespondierende Führungsflächen (15, 16) vorgesehen sind, die die Käfigenden (4, 5) in beiden radialen Richtungen festlegen.

5. Wälzkörperkäfig nach einem der Ansprüche 2 bis 4, **dadurch gekennzeichnet**, daß im Bereich der Vorsprünge (8) und Ausnehmungen (9) bei geöffneter Trennfuge (3) spröde Verbindungsstellen (17) zwischen den Käfigenden (4, 5) vorgesehen sind, welche Verbindungsstellen (17) eine Sollbruchstelle bilden.

6. Wälzkörperkäfig nach Anspruch 5, **dadurch gekennzeichnet,** daß die spröden Verbindungsstellen (17) zwischen den dem jeweils anderen Käfigende (4, 5) zugewandten Stirnkanten der Vorsprünge (8), insbesondere im Bereich der Nasen (13, 14), angeordnet sind.

# Fig. 1

Fig. 2

Fig. 3

Fig. 4

Fig. 5

Fig. 6

Europäisches
Patentamt

**EUROPÄISCHER RECHERCHENBERICHT**

Nummer der Anmeldung

EP 91 11 6006

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 494 359 (SCHAEFFLER)<br>* Das ganze Dokument *<br>--- | 1 | F 16 C 33/46 |
| A | EP-A-0 392 146 (INA)<br>--- | | |
| A | US-A-2 706 137 (STRICKLEN)<br>--- | | |
| A | FR-A-2 514 440 (INA)<br>----- | | |
| | | | **RECHERCHIERTE SACHGEBIETE (Int. Cl.5)**<br><br>F 16 C |

Der vorliegende Recherchenbericht wurde für alle Patentansprüche erstellt

| Recherchenort | Abschlußdatum der Recherche | Prüfer |
|---|---|---|
| DEN HAAG | 20-02-1992 | ORTHLIEB CH.E. |

EPO FORM 1503 03.82 (P0403)